# EUROPEAN PATENT SPECIFICATION

(11) **EP 3 494 642 B1**
(45) Date of publication and mention of the grant of the patent: **25.08.2021**
(21) Application number: 17869478.2
(22) Date of filing: 10.11.2017
(51) Int. Cl.: H04B 1/3822, H04B 7/0413, B60R 16/03, B60W 30/14, H04B 7/06, H04B 7/10

(54) **VEHICLE FOR PERFORMING WIRELESS COMMUNICATION AND COMMUNICATION METHOD THEREOF**
FAHRZEUG ZUR DURCHFÜHRUNG VON DRAHTLOSER KOMMUNIKATION UND KOMMUNIKATIONSVERFAHREN DAFÜR
VÉHICULE SERVANT À RÉALISER UNE COMMUNICATION SANS FIL ET PROCÉDÉ DE COMMUNICATION ASSOCIÉ

(30) Priority: 11.11.2016 US 201662420726 P; 30.12.2016 KR 20160184326
(43) Date of publication of application: 12.06.2019
(73) Proprietor: Samsung Electronics Co., Ltd., Suwon-si, Gyeonggi-do 16677 (KR)
(72) Inventor: BAEK, Kwanghyun, Suwon-si Gyeonggi-do 16677 (KR); KIM, Yoongeon, Suwon-si Gyeonggi-do 16677 (KR); YANG, Taesik, Suwon-si Gyeonggi-do 16677 (KR); YOUNG, Juneyong, Suwon-si Gyeonggi-do 16677 (KR)
(74) Representative: Gulde & Partner
(86) International application number: PCT/KR2017/012730
(87) International publication number: WO 2018/088842

(56) References cited:
- US-A1- 2009 042 529
- US-A1- 2012 033 718
- US-A1- 2012 134 279
- US-A1- 2013 039 271
- US-A1- 2013 191 132
- US-A1- 2014 376 455
- US-A1- 2016 013 839
- US-A1- 2016 064 805
- US-A1- 2016 293 009

## Description

### [Technical Field]

The present disclosure relates to a method and apparatus that perform wireless communication using at least one radio frequency (RF) module included in a vehicle.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (loT) where distributed entities, such as things, exchange and process information without human intervention. The Internet of Everything (loE), which is a combination of the loT technology and the Big Data processing technology through connection with a cloud server, has emerged. As technology elements, such as "sensing technology", "wired/wireless communication and network infrastructure", "service interface technology", and "Security technology" have been demanded for loT implementation, a sensor network, a Machine-to-Machine (M2M) communication, Machine Type Communication (MTC), and so forth have been recently researched. Such an loT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to loT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the loT technology.

Efforts are being made to develop an enhanced fifth generation (5G) communication system or a pre-5G communication system in order to satisfy increases in demand for wireless data traffic now that a fourth generation (4G) communication system is commercially available. A 5G communication system or a pre-5G communication system is referred to as a beyond 4G network communication system or a post long-term evolution (LTE) system. In order to achieve a high data transmission rate, consideration is being given to implementing the 5G communication system in a mmWave band (e.g., 60 GHz band). In order to mitigate any route loss of electronic waves in a mmWave band and to increase transmission distances of electronic waves, the technologies of beamforming, massive multiple input multiple output (MIMO), full dimensional MIMO (FD-MIMO), array antenna, analog beamforming, and large scale antenna have been discussed for the 5G communication system. Further, in order to enhance networks in the 5G communication system, the technologies of an innovative small cell, advanced small cell, cloud radio access network (cloud RAN), ultra-dense network, device to device communication (D2D), wireless backhaul, moving network, cooperative communication, coordinated multi-points (CoMP), and interference cancellation have been developed. In addition, hybrid frequency shift keying and quadrature amplitude modulation (FQAM) and sliding window superposition coding (SWSC), which are advanced coding modulation (ACM) methods; and filter bank multi carrier (FBMC), non-orthogonal multiple access (NOMA), and sparse code multiple access (SCMA), which are advanced access technologies, have been developed for the 5G system.

Innovation of the Internet from a human-based connection network in which a human generates and consumes information to an Internet of things (loT) network that gives and receives and processes information to and from distributed constituent elements such as things has occurred. Internet of everything (loE) technology in which big data processing technology through connection to a cloud server is combined with loT technology has appeared. In order to implement the loT, technology elements such as sensing technology, wired and wireless communication and network infrastructure, service interface technology, and security technology are required; thus, nowadays, research is being carried out on technology of a sensor network, machine to machine (M2M) communication, and machine type communication (MTC) for connection between things. In an loT environment, an intelligent Internet technology service that collects and analyzes data generated in connected things to provide a new value to a human life may be provided. The loT may be applied to the field of a smart home, smart building, smart city, smart car or connected car, smart grid, health care, smart home appliances, and high-tech medical service through fusion and complex connections between existing information technology (IT) and various industries.

Accordingly, various attempts to apply a 5G communication system to an loT network have been performed. For example, technologies such as a sensor network, M2M communication, and MTC have been implemented by the techniques of beamforming, MIMO, and array antenna, which are 5G communication technology. Application of a cloud RAN as the foregoing big data processing technology may be an example of fusion of 5G technology and loT technology.

In 5G communication technology, a communication specification in an ultrahigh frequency band is considered, and in an ultrahigh frequency band, i.e., a frequency band of 30GHz or more, because a wavelength is 10mm or less, it is referred to as a mmWave band.

A largest characteristic of a mmWave band is that an electric wave loss according to a distance increases larger in a high frequency band than in a low frequency band. However, because a wavelength is also shortened, by applying beamforming using a high gain analog directional antenna of a multiple antenna, an electric wave loss can be overcome. Therefore, a beamforming design using a multiple antenna is important in mmWave band communication.

US 2016/0293009 A1 discloses a communication device for a motor vehicle, comprising: a plurality of communication modules to be mounted to the motor vehicle and each configured to communicate wirelessly with other motor vehicles and to communicate wirelessly with one another. US2012/033718 discloses a reconfigurable modem adapter. The above information is presented as background information only to assist with an understanding of the present disclosure. No determination has been made, and no assertion is made, as to whether any of the above might be applicable as prior art with regard to the present disclosure.

### [Disclosure of Invention]

### [Technical Problem]

Nowadays, a research on a method of performing communication using an antenna installed in a vehicle has been continued.

### [Solution to Problem]

Aspects of the present disclosure are to address at least the above-mentioned problems and/or disadvantages and to provide at least the advantages described below. Accordingly, an aspect of the present disclosure is to provide a method of performing various communications according to a communication situation using a radio frequency (RF) module comprising at least two antenna elements included in a vehicle.

The invention is defined by the features of the independent claims. Further embodiments are defined in the dependent claims. Other aspects, advantages, and salient features of the disclosure will become apparent to those skilled in the art from the following detailed description, which, taken in conjunction with the annexed drawings, discloses various embodiments of the present disclosure.

### [Advantageous Effects of Invention]

As described above, because an RF module disposed in a vehicle according to an embodiment of the present disclosure includes at least two antenna elements, a communication distance can be increased according to a movement of the vehicle. Further, when at least two RF modules according to an embodiment of the present disclosure are disposed in a vehicle, by selecting a communication method (e.g., SISO communication, MIMO communication) most appropriate to a current vehicle state based on state information of the vehicle, more efficient communication can be performed.

### [Brief Description of Drawings]

The above and other aspects, features, and advantages of certain embodiments of the present disclosure will be more apparent from the following description taken in conjunction with the accompanying drawings, in which:
FIG. 1 is a conceptual diagram illustrating a vehicle that communicates with a base station and a terminal according to an embodiment of the present disclosure;
FIG. 2A is a flowchart illustrating a communication method of the vehicle according to an embodiment of the present disclosure;
FIG. 2B is a block diagram illustrating an internal configuration of a vehicle according to an embodiment of the present disclosure;
FIG. 3A is a block diagram illustrating a radio frequency (RF) unit that performs communication of a vehicle according to an embodiment of the present disclosure;
FIG. 3B is a block diagram illustrating an RF unit and a controller that perform communication of a vehicle according to an embodiment of the present disclosure;
FIG. 3C is a diagram illustrating an example in which one RF module is placed in a vehicle according to an embodiment of the present disclosure;
FIG. 4 is a diagram illustrating a vehicle in which two RF modules are placed according to an embodiment of the present disclosure;
FIGS. 5A and 5B are diagrams illustrating a vehicle in which a first RF module and a second RF module are placed according to an embodiment of the present disclosure;
FIG. 6A is a diagram illustrating a vehicle in which two RF modules are placed in a first surface and in which two RF modules are placed in a second surface according to an embodiment of the present disclosure;
FIG. 6B is a block diagram illustrating an internal configuration of the vehicle of FIG. 6A according to an embodiment of the present disclosure;
FIG. 7 is a block diagram illustrating a configuration of an RF unit including four RF modules according to an embodiment of the present disclosure; and
FIGS. 8A and 8B are diagrams illustrating a vehicle in which two RF modules each are placed at different surfaces of an outer edge thereof according to an embodiment of the present disclosure.

Throughout the drawings, like reference numerals will be understood to refer to like parts, components, and structures.

### [Mode for the Invention]

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

Herein, it may be understood that each block of a flowchart and combinations of the flowchart may be performed by computer program instructions. Because these computer program instructions may be mounted in a processor of a universal computer, a special computer, or other programmable data processing equipment, the instructions performed through a processor of a computer or other programmable data processing equipment generate a means that performs functions described in a block(s) of the flowchart. In order to implement a function with a specific method, because these computer program instructions may be stored at a computer available or computer readable memory that can direct a computer or other programmable data processing equipment, instructions stored at the computer available or computer readable memory may produce a production item including an instruction means that performs a function described in block(s) of the flowchart. Because computer program instructions may be mounted on a computer or other programmable data processing equipment, a series of operations are performed on the computer or other programmable data processing equipment and generate a process executed with the computer, and instructions that direct the computer or other programmable data processing equipment may provide operations for executing functions described in block(s) of the flowchart.

Further, each block may represent a portion of a module, segment, or code including at least one executable instruction for executing a specific logical function(s). Further, in several replaceable execution examples, it should be noted that functions described in blocks may be performed regardless of order. For example, two consecutively shown blocks may be substantially simultaneously performed or may be sometimes performed in reverse order according to a corresponding function.

In this case, a term "-unit" used in the present embodiment means a software or hardware component such as field-programmable gate array (FPGA) or application-specific integrated circuit (ASIC) and performs any function. However, "-unit" is not limited to software or hardware. A "-unit" may be configured to store at a storage medium that can address and may be configured to reproduce at least one processor. Therefore, "-unit" includes, for example, components (such as software components, object-oriented software components, class components, and task components), processes, functions, attributes, procedures, subroutines, segments of a program code, drivers, firmware, microcode, circuit, data, database, data structures, tables, arrays, and variables. A function provided within constituent elements and "-units" may be performed by coupling the smaller number of constituent elements and "-units" or by subdividing the constituent elements and "-units" into additional constituent elements and "-units". Further, constituent elements and "-units" may be implemented in a manner to reproduce at least one central processing unit (CPU) within a device or a security multimedia card.

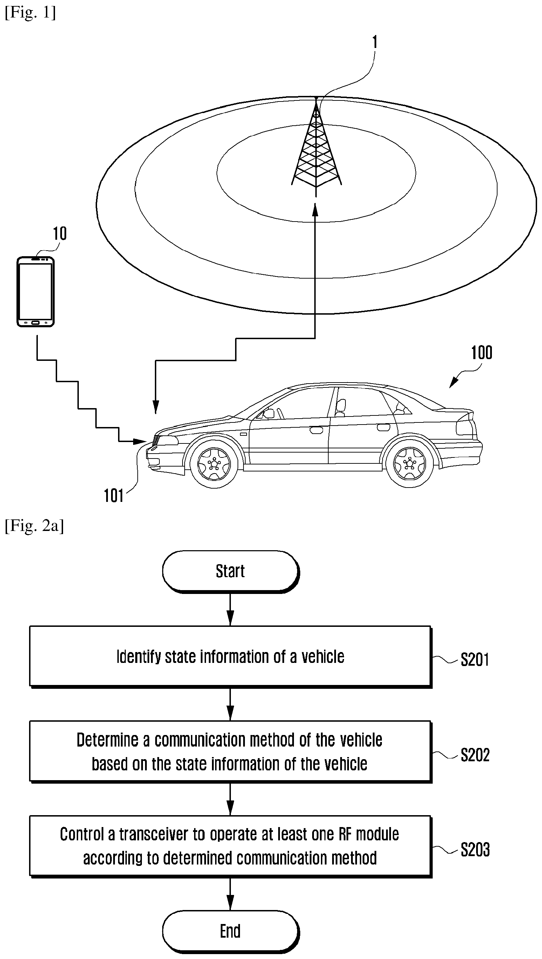

FIG. 1 is a conceptual diagram illustrating a vehicle that communicates with a base station and a terminal according to an embodiment of the present disclosure.

Referring to FIG. 1, a vehicle 100 according to an embodiment of the present disclosure may include at least one radio frequency (RF) module 101 for receiving a wireless signal from the outside and transmitting a wireless signal to the outside and communicate with at least one of a base station 1 and a terminal 10 using the RF module.

The vehicle 100 according to an embodiment of the present disclosure may include an RF module 101 in one area of a front bumper thereof. However, unlike the drawing, the vehicle 100 according to an embodiment of the present disclosure may include at least one RF module in at least one surface of a plurality of surfaces forming an outer edge thereof. The RF module 101 according to an embodiment of the present disclosure may be, for example, attached to a metal structure forming an outer edge of the vehicle or mounted within a metal structure. That is, in order to transmit and receive a wireless signal emitted in various directions for communication according to various communication methods of the vehicle 100 according to an embodiment of the present disclosure, a position and the number of the RF module 101 disposed at the vehicle may be variously determined.

A vehicle according to an embodiment of the present disclosure may perform various communication according to a vehicle state using at least one RF module included therein. For example, the controller of the vehicle may determine a communication method most appropriate to a current state of the vehicle and control an RF unit to perform communication according to the determined communication method.

Hereinafter, a communication method of a vehicle based on a vehicle state according to an embodiment of the present disclosure will be described in detail with reference to the drawings attached to this specification.

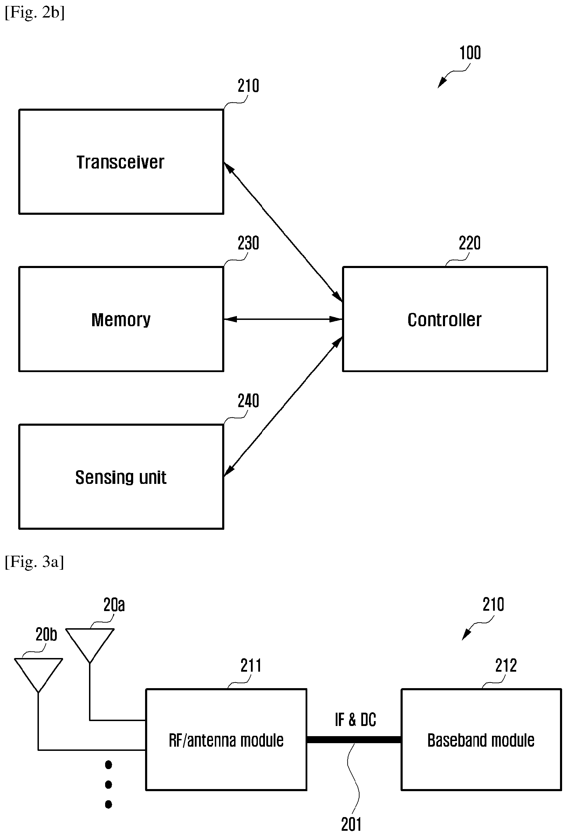

FIG. 2A is a flowchart illustrating a communication method of the vehicle according to an embodiment of the present disclosure, and FIG. 2B is a block diagram illustrating an internal configuration of a vehicle according to an embodiment of the present disclosure.

Referring to FIG. 2A, in order to determine a current state of the vehicle, the vehicle according to an embodiment of the present disclosure may acquire state information thereof at operation S201.

Here, state information of the vehicle is an entire kind of information for determining a current state of the vehicle and may include, for example, a driving speed, driving mode, driving environment, driving route of the vehicle, and information related to a component operation of the vehicle.

Referring to FIG. 2B, the controller 220 of the vehicle according to an embodiment of the present disclosure may acquire state information of the vehicle from various configurations included in the vehicle.

For example, the controller 220 (e.g., at least one processor) of the vehicle may continuously receive position information of the vehicle from the RF unit 210 and acquire driving route information of the vehicle or acquire driving environment information of the vehicle based on weather information and road situation information received from the outside. Further, for example, the controller 220 of the vehicle may identify driving speed information of the vehicle, operation information (e.g., whether a wiper of the vehicle operates, whether a sun roof of the vehicle is opened) of a vehicle component, driving environment information (temperature difference or humidity difference between the outside and the inside of the vehicle) of the vehicle, and driving mode information (manual driving mode driven by a driver or automatic driving mode for self-driving) of the vehicle from a sensing unit 240 (e.g., at least one sensor).

In this way, when state information of the vehicle is acquired, the controller of the vehicle according to an embodiment of the present disclosure may determine a communication method of the vehicle based on the identified vehicle state information at operation S202.

Here, a communication method of the vehicle may be changed according to the number and a position of RF modules disposed at the vehicle. For example, when one RF module is disposed at each of different surfaces forming an outer edge of the vehicle, the controller 220 of the vehicle may determine to perform communication with any one method of single input single output (SISO) communication, SISO and diversity communication, and multiple input multiple output (MIMO) communication according to a vehicle state. Alternatively, when two RF modules are disposed at each of different surfaces forming an outer edge of the vehicle, the controller 220 of the vehicle may determine to perform communication with any one method of SISO communication, SISO and diversity communication, MIMO communication, and MIMO and diversity communication according to a vehicle state.

In a more detailed example, when a controller 220 according to an embodiment of the present disclosure acquires running speed information of the vehicle, if a running speed of the vehicle is a first speed, the controller 220 may determine to perform SISO communication, and if a running speed of the vehicle is a second speed faster than a first speed, the controller 220 may determine to perform MIMO communication. Here, the first speed may be a speed included in a speed range of a vehicle in which a driver transmits and receives data in an average transmission speed in a mobile communication system. Further, the second speed is a speed faster by a predetermined magnitude or more than the first speed and may be determined based on a level in which a receiving rate of a wireless signal transmitting from the base station is deteriorated or a level in which the handover execution number increases. Information about a reference of the first speed and the second speed according to an embodiment of the present disclosure may be previously stored at a memory unit 230 (e.g., a storage) of FIG. 2B.

In another example, the controller 220 according to an embodiment of the present disclosure may acquire driving mode information of the vehicle. Here, a driving mode of the vehicle may include, for example, a manual driving mode and an automatic driving mode. More specifically, the manual driving mode may mean a driving mode in which the vehicle is driven by a driver, and the automatic driving mode may be a driving mode in which the vehicle performs self-driving driven by the controller thereof. That is, the automatic driving mode may be a driving mode that recognizes a position of the vehicle through a sensor attached to the vehicle and that runs while avoiding an obstacle or that runs while adjusting a vehicle speed based on running information of adjacent vehicles or current driving environment information of the vehicle collected from the RF unit 210.

In this case, when a driving mode of the vehicle is a manual driving mode, the controller 220 of the vehicle may determine to perform SISO communication. Further, when a driving mode of the vehicle is an automatic driving mode, in order to receive a plurality of state information (e.g., speed information or driving route information of adjacent vehicles) of adjacent vehicles from each of the adjacent vehicles, the controller 220 according to an embodiment of the present disclosure may determine to perform MIMO communication.

In another example, the controller 220 according to an embodiment of the present disclosure may acquire driving route information of the vehicle, and when a moving direction of the vehicle according to an acquired vehicle estimated route advances to a specific region, the controller 220 may determine to perform diversity communication. In this case, the controller 220 of the vehicle may acquire destination information of the vehicle through a navigation module (not shown) and determine whether a specific region is included in an estimated route toward a destination of the vehicle.

In this case, when the vehicle is performing SISO communication, the controller 220 according to an embodiment of the present disclosure may determine to perform SISO and diversity communication, and when the vehicle is performing MIMO communication, the controller 220 may determine to perform MIMO and diversity communication. Here, a specific region is a region of a high probability in which multipath fading of a signal or polarization miss of an antenna is to occur when performing communication and may include, for example, a forest or a mountain region. At the memory unit 230 according to an embodiment of the present disclosure, map information and position information about a specific region may be stored.

In another example, the controller 220 according to an embodiment of the present disclosure may acquire information about an operation of a vehicle component. For example, when detection information about a wiper operation of the vehicle is acquired from the sensing unit 240, the controller 220 of the vehicle may determine to perform MIMO communication in consideration of an attenuation rate of a wireless signal according to weather. In this case, when the vehicle is performing SISO communication, the controller 220 according to an embodiment of the present disclosure may change a communication method to perform MIMO communication. Further, in this case, the controller 220 according to an embodiment of the present disclosure may determine to perform MIMO communication in consideration of information of a temperature difference or a humidity difference between the outside and the inside of the vehicle from the sensing unit 240 in addition to information about a vehicle component.

In the foregoing various embodiments, an example has been described in which the controller 220 according to an embodiment of the present disclosure determines a communication method of the vehicle based on state information of the vehicle, but by combining two or more state information, a communication method of the vehicle may be determined.

Further, when a vehicle state is changed based on state information of the vehicle while performing any one communication method, the controller 220 according to an embodiment of the present disclosure may change a determined communication method. For example, while performing SISO communication or MIMO communication according to a driving mode of the vehicle, when a specific region is included in an estimated driving route of the vehicle, the controller 220 according to an embodiment of the present disclosure may change a communication method determined to perform SISO and diversity communication or MIMO and diversity communication.

In this way, when the controller 220 according to an embodiment of the present disclosure determines a communication method of the vehicle, the controller 220 may control the RF unit 210 to operate at least one RF module disposed at the vehicle according to the determined communication method at operation S203.

In this case, when performing communication according to a determined communication method, operation may be changed in which the controller 220 according to an embodiment of the present disclosure controls an RF unit according to a method and the number in which at least one RF module is disposed at the vehicle. A more detailed operation control method of the RF unit related thereto will be described hereinafter with reference to the attached drawings.

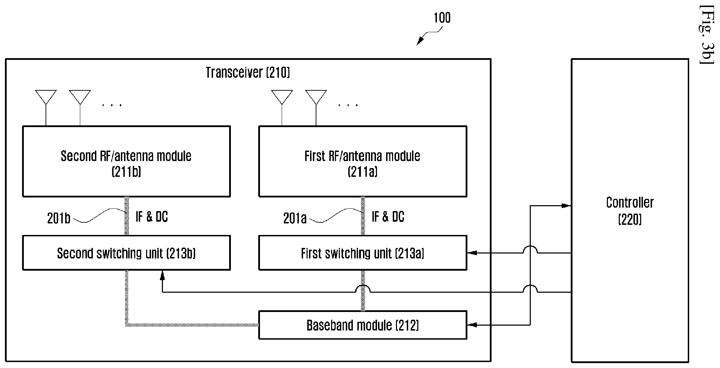

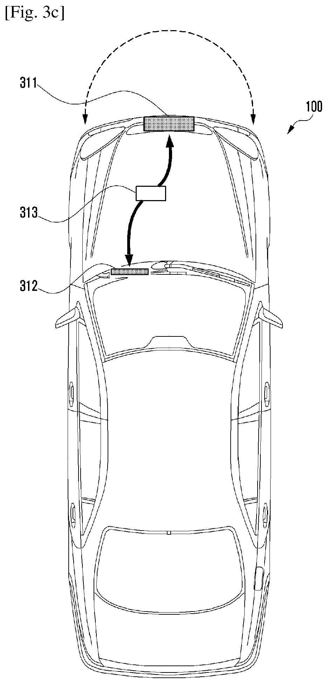

FIG. 3A is a block diagram illustrating an RF unit that performs communication of a vehicle according to an embodiment of the present disclosure, FIG. 3B is a block diagram illustrating an RF unit and a controller that perform communication of a vehicle according to an embodiment of the present disclosure, and FIG. 3C is a diagram illustrating an example in which one RF module is disposed in a vehicle according to an embodiment of the present disclosure.

Referring to FIG. 3A, the vehicle 100 according to an embodiment of the present disclosure may include an RF unit for performing communication.

The RF unit 210 according to an embodiment of the present disclosure may include an RF module 211, a baseband module 212, and a cable 201 that connects the RF module 211 and the baseband module 212.

The RF module 211 according to an embodiment of the present disclosure may include at least two antenna elements 20a and 20b that can receive a wireless signal (electronic waves) received from the outside or that can transmit a wireless signal to the outside. FIG. 3A illustrates an example in which two antenna elements are included in one RF module 211, but the RF module according to an embodiment of the present disclosure may include at least two antenna elements.

The antenna elements 20a and 20b each included in one RF module 211 according to an embodiment of the present disclosure may receive the same wireless signal or may emit the same wireless signal. In this way, because a plurality of antenna elements each included in one RF module according to an embodiment of the present disclosure may transmit and receive the same wireless signal, a communication distance of a moving vehicle can increase and transmission efficiency can be enhanced.

Although not shown in the drawing, the RF module 211 according to an embodiment of the present disclosure may include a radio frequency integrated circuit (RFIC) into which a power amp (PA), low noise amp (LNA), filter, and mixer are incorporated.

The cable 201 according to an embodiment of the present disclosure may perform a passage function that transfers a wireless signal received through an antenna element to the baseband module 212. In this case, a signal down-converted through a mixer of the RF module 211 is transferred to the baseband module 212 through the cable 201.

The baseband module 212 according to an embodiment of the present disclosure may include an RFIC including an analog-to-digital converter (ADC). Further, the baseband module 212 may analyze digital data including channel information and process and control a final signal corresponding to a wireless signal received from the outside or a final signal to transmit to the outside.

In the cable 201, which is a path between the baseband module 212 and the RF module 211, a switching unit for connecting or opening the path may be additionally disposed.

Referring to FIG. 3B, a first switching unit 213a for connecting or opening a first path may be disposed between a first RF module 211a and the baseband module 212, and a second switching unit 213b for connecting or opening a second path may be included between a second RF module 211b and the baseband module 212. FIG. 3B illustrates an example in which two switching units are included, but when three or more RF modules are provided according to an embodiment of the present disclosure, three or more switching units for connecting or opening paths between RF modules and a baseband module may be provided to correspond thereto.

The controller 220 according to an embodiment of the present disclosure shown in FIG. 3B may determine a communication method of the vehicle according to a vehicle state determined based on state information of the vehicle and control the RF unit 210 such that the RF module transmits and receives a wireless signal based on the determined communication method. More specifically, the controller 220 according to an embodiment of the present disclosure may determine to perform SISO communication based on state information of the vehicle and control one switching unit to connect a path between one RF module and a baseband module to correspond thereto. In another example, the controller 220 according to an embodiment of the present disclosure may determine to perform SISO and diversity communication based on state information of the vehicle and control a switching unit to connect or open paths between at least one RF module and a baseband module to correspond thereto.

Referring to FIG. 3C, the RF module according to an embodiment of the present disclosure may be disposed in at least one surface of surfaces forming an outer edge of the vehicle 100. FIG. 3C illustrates an example in which an RF module 311 is disposed at one surface corresponding to the front side of the vehicle 100, but the RF module may be disposed at one surface corresponding to another direction (side portion or the rear side) among the surfaces.

Referring to FIG. 3C, when the vehicle 100 according to an embodiment of the present disclosure includes one RF module 311 (hereinafter, referred to as a first RF module), the vehicle 100 may perform SISO communication. In this case, the controller according to an embodiment of the present disclosure may control a first switching unit 313 to connect a first path between the first RF module 311 and a baseband module 312.

In this case, a wireless signal transmitted from the outside may be received from each of antenna elements included in the first RF module 311. Further, when the vehicle 100 has predetermined data to transmit to an external base station or a terminal, a wireless signal including the data may be transmitted from each of antenna elements included in the first RF module 311.

A vehicle according to an embodiment of the present disclosure may include a plurality of RF modules disposed in at least two surfaces of a plurality of surfaces forming an outer edge thereof.

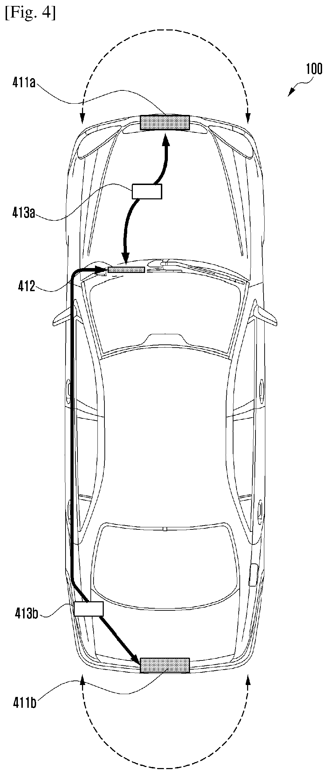

FIG. 4 is a diagram illustrating a vehicle in which two RF modules are disposed according to an embodiment of the present disclosure.

Referring to FIG. 4, the vehicle 100 according to an embodiment of the present disclosure may include a first RF module 411a disposed at a first surface (e.g., a surface corresponding to a front bumper of the vehicle) and a second RF module 411b disposed at a second surface (e.g., a surface corresponding to a rear bumper of the vehicle) of a plurality of surfaces forming an outer edge thereof.

As described above, the first RF module 411a and the second RF module 411b each may include a plurality of antenna elements. Here, the first RF module 411a and the second RF module 411b may transmit and receive a wireless signal in an angle of 0° to 180° using each of a first surface and a second surface as a reference surface.

For example, as shown in FIG. 4, when the first RF module 411a is disposed at one surface corresponding to the front side of the vehicle and when the second RF module 411b is disposed at one surface corresponding to the rear side of the vehicle, the sum of transmitting and receiving ranges of each of the first RF module 411a and the second RF module 411b may be 0° to 360°. Therefore, when the first RF module 411a and the second RF module 411b are disposed in this way, a wireless signal transmitted in various directions can be received, and a wireless signal can be emitted in various directions.

The controller according to an embodiment of the present disclosure may determine a current state of the vehicle based on acquired vehicle state information and determine a communication method of the vehicle based on the determined current state. For example, when the controller according to an embodiment of the present disclosure determines to perform SISO communication based on state information of the vehicle, the controller may control a first switching unit 413a to connect a first path between the first RF module 411a and a baseband module 412 and control a second switching unit 413b to open a second path between the second RF module 411b and the baseband module 412. In this case, a wireless signal may be transmitted and received by only the first path. In the present embodiment, an example of performing SISO communication using the first RF module 411a positioned at the front side of the vehicle has been described, but the controller may perform SISO communication using the second RF module 411b.

In another example, when the controller according to an embodiment of the present disclosure determines to perform SISO and diversity communication based on state information of the vehicle, the controller may control the first switching unit 413a to connect a first path and control the second switching unit 413b to connect a second path.

More specifically, in a state in which the controller of the vehicle performs SISO communication through the first path and the first RF module 411a disposed at the front side of the vehicle, if multipath fading has occurred in a wireless signal received through the first RF module 411a, a case of controlling the second switching unit 413b to operate together with the second RF module 411b disposed at the rear side of the vehicle has been described. That is, the controller of the vehicle according to an embodiment of the present disclosure may sequentially control the first switching unit 413a and the second switching unit 413b to connect the second path after the first path is connected.

Further, for example, when SISO and diversity communication according to an embodiment of the present disclosure is performed, the same wireless signal may be transmitted and received through each of the first path and the second path (space diversity communication). Further, for example, when SISO and diversity communication according to an embodiment of the present disclosure is performed, a component (e.g., horizontally polarized wave) having first directionality of a wireless signal may be transmitted and received through the first path, and a component (e.g., vertically polarized ware) having second directionality of a wireless signal may be transmitted and received through the second path (polarization diversity).

In another example, when the controller according to an embodiment of the present disclosure determines to perform MIMO communication based on state information of the vehicle, the controller may control the first switching unit 413a to connect a first path and control the second switching unit 413b to connect the second path. In this case, a wireless signal transmitted and received through the first path and a wireless signal transmitted and received through the second path may be different signals.

In this way, the controller according to an embodiment of the present disclosure may determine a current state of the vehicle and connect or open a path between RF modules and a baseband module in order to perform a communication method most appropriate to a determined state, thereby performing more efficient communication.

FIG. 4 illustrates an example in which the first RF module 411a and the second RF module 411b are disposed at a surface corresponding to the front side of the vehicle and a surface corresponding to the rear side, but the first RF module and the second RF module may be disposed at various positions.

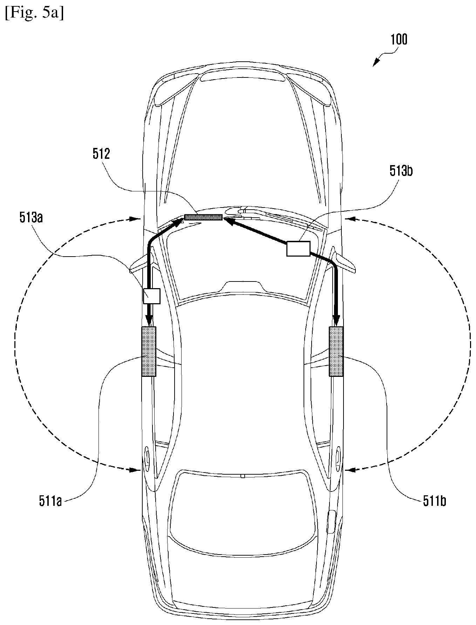

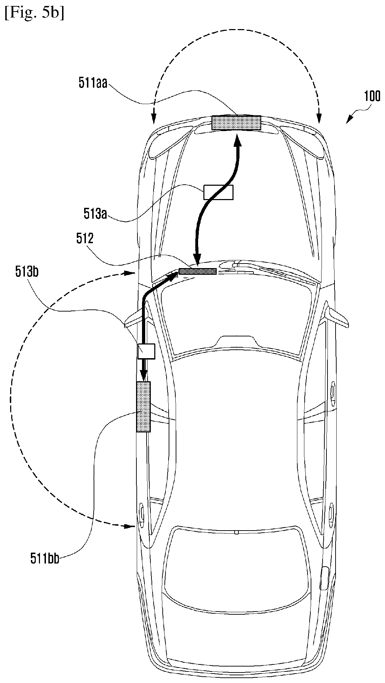

FIGS. 5A and 5B are diagrams illustrating a vehicle in which a first RF module and a second RF module are disposed according to an embodiment of the present disclosure.

Referring to FIG. 5A, a first RF module 511a according to an embodiment of the present disclosure may be disposed at one surface corresponding to a side portion of the vehicle, and a second RF module 511b may be disposed at another one surface corresponding to a side portion of the vehicle. In this way, when a surface in which the first RF module 511a is disposed and a surface in which the second RF module 511b is disposed are parallel to each other, a transmitting and receiving range according to the first RF module 511a and the second RF module 511b may have an angle of 0° to 360°.

Alternatively, referring to FIG. 5B, the first RF module 511a may be disposed at one surface corresponding to the front side of the vehicle, and the second RF module 511b may be disposed at one surface corresponding to a side portion of the vehicle. In this case, a transmitting and receiving range according to the first RF module 511a and the second RF module 511b may have an angle of 0° to 270°.

In the RF module, as a path between baseband modules is extended, a transition loss may increase. However, as in a case of FIGS. 5A and 5B, when RF modules each are disposed, a distance between the RF module and the baseband module is shortened, and a loss occurring when transferring a wireless signal can be reduced.

Although not shown in the drawing, a vehicle according to an embodiment of the present disclosure may further include a third RF module disposed parallel to a first RF module at a first surface. Further, a vehicle according to an embodiment of the present disclosure may further include a third switching unit for connecting or opening a third path between the third RF module and a baseband module. In this case, a vehicle according to an embodiment of the present disclosure may perform the above-described SISO communication, SISO and diversity communication, and MIMO communication using the first RF module, the second RF module, and the third RF module.

For example, the controller according to an embodiment of the present disclosure may determine to perform SISO communication based on state information of the vehicle. In this case, the controller according to an embodiment of the present disclosure may control a first switching unit to connect a first path and control a second switching unit to open a second path. In this case, the controller according to an embodiment of the present disclosure may control the first switching unit to the third switching unit to perform SISO communication through the second path or the third path.

In another example, when the controller according to an embodiment of the present disclosure determines to perform SISO and diversity communication based on state information of the vehicle, the controller may control a first switching unit to connect a first path and control a second switching unit to connect the second path. In this case, the controller according to an embodiment of the present disclosure may control the first switching unit to the third switching unit to perform SISO and diversity communication through the second path and the third path.

In another example, when the controller according to an embodiment of the present disclosure determines to perform MIMO communication based on state information of the vehicle, the controller may control a first switching unit to connect a first path, control a second switching unit to connect a second path, and control a third switching unit to open a third path. In this case, a wireless signal transmitted and received through the first path and a wireless signal transmitted and received through the second path may be different signals. Alternatively, the controller according to an embodiment of the present disclosure may control a first switching unit to connect a first path, control a second switching unit to open a second path, and control a third switching unit to connect a third path. Similarly, a wireless signal transmitted and received through the first path and the third path may be different wireless signals.

Hereinafter, when a plurality of RF modules is disposed at a first surface and when a plurality of RF modules is disposed at a second surface, a communication method of the vehicle according to an embodiment of the present disclosure will be described.

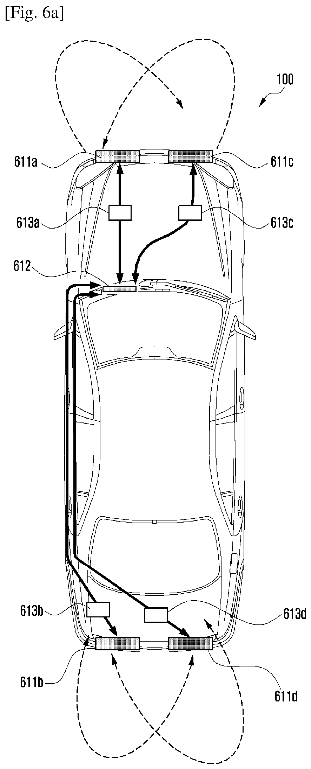

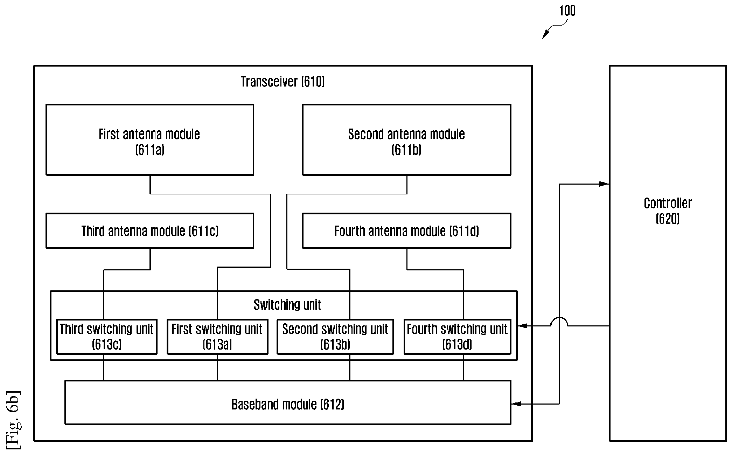

FIG. 6A is a diagram illustrating a vehicle in which two RF modules are disposed at a first surface and in which two RF modules are disposed at a second surface according to an embodiment of the present disclosure, and FIG. 6B is a block diagram illustrating an internal configuration of the vehicle of FIG. 6A according to an embodiment of the present disclosure.

Referring to FIG. 6A, the vehicle 100 according to an embodiment of the present disclosure may include a first RF module 611a and third RF module 611c disposed at a first surface and a second RF module 611b and fourth RF module 611d disposed at a second surface. In this case, as shown in FIG. 6B, an RF unit 610 may further include a first switching unit 613a for connecting or opening a first path between the first RF module 611a and a baseband module 612, a second switching unit 613b for connecting or opening a second path between the second RF module 611b and the baseband module 612, a third switching unit 613c for connecting or opening a third path between the third RF module 611c and the baseband module 612, and a fourth switching unit 613d for connecting or opening a fourth path between the fourth RF module 611d and the baseband module 612.

A controller 620 (e.g., at least one processor) according to an embodiment of the present disclosure may determine a current state of the vehicle based on acquired vehicle state information, determine a communication method most appropriate to a current state of the vehicle, and control a switching operation of the first switching unit to the fourth switching unit 613a, 613b, 613c, and 613d.

For example, when the controller 620 according to an embodiment of the present disclosure determines to perform SISO communication based on state information of the vehicle, the controller 620 may control the first switching unit 613a to connect a first path, control the second switching unit 613b to open a second path, control the third switching unit 613c to open a third path, and control the fourth switching unit 613d to open a fourth path. In this case, a wireless signal may be transmitted and received by only the first path. In the present embodiment, an example of performing SISO communication using the first RF module 611a has been described, but the controller 620 may control the first switching unit to the fourth switching unit 613a, 613b, 613c, and 613d to perform SISO communication through any one path of the second path to the fourth path.

In another example, when the controller 620 according to an embodiment of the present disclosure determines to perform SISO and diversity communication based on state information of the vehicle, the controller 620 may control the first switching unit 613a to connect a first path, control the second switching unit 613b to connect a second path, control the third switching unit 613c to open a third path, and control the fourth switching unit 613d to open a fourth path.

In this case, for example, the same wireless signal may be transmitted and received through each of the first path and the second path (space diversity communication). Further, for example, a component (e.g., horizontally polarized wave) having first directionality of a wireless signal may be transmitted and received through the first path, and a component (e.g., vertically polarized ware) having second directionality of a wireless signal may be transmitted and received through the second path (polarization diversity).

In SISO and diversity communication according to the present embodiment, a case has been described in which the first path and the second path are connected, but the controller 620 may control the first switching unit to the fourth switching unit 613a, 613b, 613c, and 613d to connect the first path and the fourth path, the second path and the third path, or the third path and the fourth path to perform SISO and diversity communication.

In another example, when the controller 620 according to an embodiment of the present disclosure determines to perform MIMO communication based on state information of the vehicle, the controller 620 may control the first switching unit 613a to connect a first path, control the second switching unit 613b to open a second path, control the third switching unit 613c to connect a third path, and control the fourth switching unit 613d to open a fourth path. In this case, a wireless signal transmitted and received through the first path and a wireless signal transmitted and received through the third path may be different signals. In the present embodiment, a case has been described in which the first path and the third path are connected, but the controller 620 according to an embodiment of the present disclosure may connect the first path and the second path, connect the third path and the fourth path, or connect the second path and the fourth path to perform MIMO communication.

In another example, when the controller 620 according to an embodiment of the present disclosure determines to perform MIMO and diversity communication based on state information of the vehicle, the controller 620 may control the first switching unit 613a to connect a first path, control the second switching unit 613b to connect a second path, control the third switching unit 613c to connect a third path, and control the fourth switching unit 613d to connect a fourth path. In this case, a wireless signal transmitted and received through the first path and the second path and a wireless signal transmitted and received through the third path and the fourth path may be different signals. In a more detailed example, a first wireless signal may be transmitted and received through the first path and the second path, and a second wireless signal may be transmitted and received through the third path and the fourth path.

In MIMO and diversity communication according to the present embodiment, a case of transmitting and receiving a first wireless signal through the first path and the second path and transmitting and receiving a second wireless signal through the third path and the fourth path has been described, but the controller 620 according to an embodiment of the present disclosure may control the first switching unit to the fourth switching unit 613a, 613b, 613c, and 613d to transmit and receive a first wireless signal through the first path and the fourth path and to transmit and receive a second wireless signal through the second path and the third path.

In this way, because the controller according to an embodiment of the present disclosure determines a communication method in consideration of a current state of the vehicle determined from state information of the vehicle, communication can be performed according to a most efficient method in a current state of the vehicle.

When four RF/antenna modules are disposed according to an embodiment of the present disclosure, the RF unit may include two baseband modules.

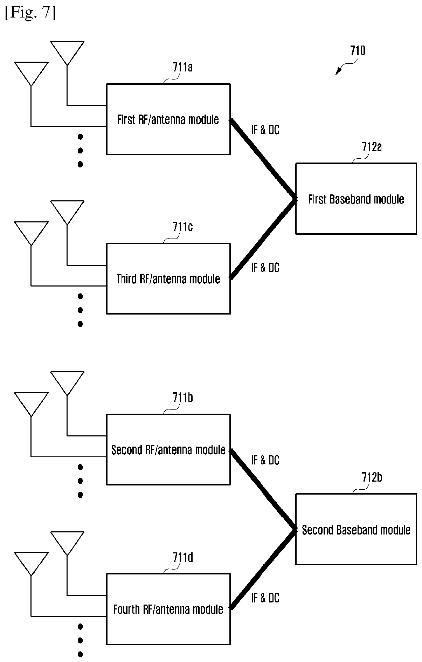

FIG. 7 is a block diagram illustrating a configuration of an RF unit including four RF modules according to an embodiment of the present disclosure.

Referring to FIG. 7, an RF unit 710 according to an embodiment of the present disclosure may include a first RF module 711a, second RF module 711b, third RF module 711c, and fourth RF module 711d. Here, the first RF module 711a and the third RF module 711c may be disposed at a first surface forming an outer edge of the vehicle, and the second RF module 711b and the fourth RF module 711d may be disposed at a second surface forming an outer edge of the vehicle.

In order to perform more efficient communication, a baseband module according to an embodiment of the present disclosure may include a first baseband module 712a connected to the first RF module 711a and the third RF module 711c and a second baseband module 712b connected to the second RF module 711b and the fourth RF module 711d.

The baseband modules 712a and 712b each may control switching units connected between the first RF module to the fourth RF module 711a, 711b, 711c, and 711d according to a communication mode determined by the controller. Although not shown in the drawing, according to the present embodiment, a first switching unit to a fourth switching unit corresponding to the first RF module to the fourth RF module 711a, 711b, 711c, and 711d, respectively may be included.

When a vehicle according to an embodiment of the present disclosure includes a plurality of RF modules at each of a plurality of surfaces, the plurality of RF modules may be disposed at the vehicle with a method different from that of FIG. 6A.

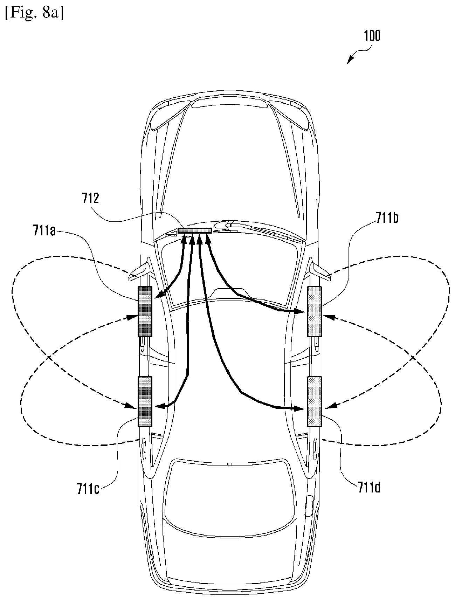

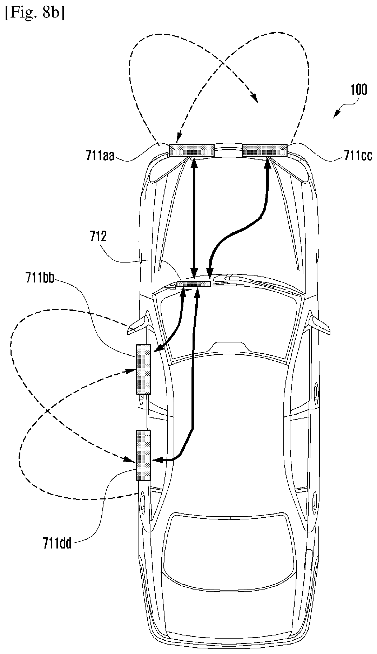

FIGS. 8A and 8B are diagrams illustrating a vehicle in which two RF modules each are disposed at different surfaces of an outer edge thereof according to an embodiment of the present disclosure.

Referring to FIG. 8A, the first RF module 711a and the third RF module 711c according to an embodiment of the present disclosure may be disposed at one surface corresponding to a side portion of the vehicle, and the second RF module 711b and the fourth RF module 711d may be disposed at another one surface corresponding to a side portion of the vehicle. In this way, when a surface in which the first RF module 711a and the third RF module 711c are disposed and a surface in which the second RF module 711b and the fourth RF module 711d are disposed are parallel to each other, a transmitting and receiving range according to the first RF module 711a and the third RF module 711c; and the second RF module 711b and the fourth RF module 711d may have an angle of 0° to 360°.

Alternatively, referring to FIG. 8B, a first RF module 711aa and a third RF module 711cc may be disposed at one surface corresponding to the front side of the vehicle, and a second RF module 711bb and a fourth RF module 711dd may be disposed at another one surface corresponding to a side portion of the vehicle. In this case, a transmitting and receiving range according to the first RF module 711aa and the third RF module 711cc; and the second RF module 711bb and the fourth RF module 711dd may have an angle of 0° to 270°.

As described above, because an RF module disposed in a vehicle according to an embodiment of the present disclosure includes at least two antenna elements, a communication distance can be increased according to a movement of the vehicle. Further, when at least two RF modules according to an embodiment of the present disclosure are disposed in a vehicle, by selecting a communication method (e.g., SISO communication, MIMO communication) most appropriate to a current vehicle state based on state information of the vehicle, more efficient communication can be performed.

While the present disclosure has been particularly shown and described with reference to embodiments thereof it will be understood by those skilled in the art that various changes in form and details may be made therein without departing from the scope of the disclosure as defined by the appended claims. Therefore, it should be understood that the foregoing embodiments are not limited but are illustrative.

## Claims

1. A vehicle (100) in a wireless communication system, the vehicle (100) comprising:
a transceiver (210; 610; 710) comprising:
a first radio frequency, RF, module (311; 411a; 511a; 611a; 711aa) placed in a first surface;
a second RF module (211b; 411b; 511b; 611b; 711b) placed in a second surface of a plurality of surfaces forming an outer edge of the vehicle (100),
wherein each of the first RF module (311; 411a; 511a; 611a; 711aa) and the second RF module (211b; 411b; 511b; 611b; 711b) comprises at least two antenna elements (20a, 20b); and
at least one processor (220; 620) configured to
identify state information of the vehicle (100),
select a communication method from a plurality of communication methods based on the identified state information, wherein the plurality of communication methods are determined based on a number of the at least two antenna elements (20a, 20b) and a position of the at least one surface where the at least two antenna elements (20a, 20b) are placed, and
control the transceiver (210; 610; 710) to perform the selected communication method by using at least one of the first RF module (311; 411a; 511a; 611a; 711aa) or the second RF module (211b; 411b; 511b; 611b; 711b).

2. The vehicle (100) of claim 1, wherein the at least one processor (220; 620) further configured to control the transceiver (210; 610; 710) to operate at least one of the first RF module (311; 411a; 511a; 611a; 711aa) or the second RF module (211b; 411b; 511b; 611b; 711b) based on the state information of the vehicle (100).

3. The vehicle (100) of claim 2, wherein the state information of the vehicle (100) comprises at least one of a driving mode of the vehicle (100), a speed of the vehicle (100), a driving route of the vehicle (100), a driving environment of the vehicle (100), or information on an operation of a component included in the vehicle (100).

4. The vehicle (100) of claim 3, wherein the transceiver (210; 610; 710) further comprises:
a baseband module (212; 312; 412; 512; 712a, 712b) configured to convert a frequency of the wireless signal to a predetermined frequency;
a first switch (213a; 413a; 613a) for connecting or opening a first path between the first RF module (311; 411a; 511a; 611a; 711aa) and the baseband module (212; 312; 412; 512; 712a, 712b); and
a second switch (213b; 413b; 613b) for connecting or opening a second path between the second RF module (211b; 411b; 511b; 611b; 711b) and the baseband module (212; 312; 412; 512; 712a, 712b).

5. The vehicle (100) of claim 3, wherein the at least one processor is further configured to:
determine to perform single input single output, SISO, communication, if a speed of the vehicle (100) is a first speed, and
determine to perform multiple input multiple output, MIMO, communication, if a speed of the vehicle (100) is a second speed faster than the first speed.

6. The vehicle (100) of claim 4, wherein the at least one processor (220; 620) is further configured to:
control the first switch (213a; 413a; 613a) to connect the first path and control the second switch (213b; 413b; 613b) to open the second path, when the at least one processor (220; 620) determines to perform single input single output, SISO, communication based on the state information of the vehicle (100),
control the first switch (213a; 413a; 613a) to connect the first path and control the second switch (213b; 413b; 613b) to connect the second path, when the at least one processor (220; 620) determines to perform SISO and diversity communication based on the state information of the vehicle (100), and
control the first switch (213a; 413a; 613a) to connect the first path and control the second switch (213b; 413b; 613b) to connect the second path, when the at least one processor (220; 620) determines to perform multiple input multiple output, MIMO, communication based on the state information of the vehicle (100).

7. The vehicle (100) of claim 4, wherein the transceiver (210; 610; 710) further comprises:
a third RF module (611c; 711c, 711cc) placed in the first surface and comprising at least two antenna elements (20a, 20b);
a fourth RF module (611d; 711d, 711dd) placed in the second surface and comprising at least two antenna elements (20a, 20b);
a third switch (613c) for connecting or opening a third path between the third RF module (611c; 711c, 711cc) and the baseband module (212; 312; 412; 512; 712a, 712b); and
a fourth switch (613d) for connecting or opening a fourth path between the fourth RF module (611d; 711d, 711dd) and the baseband module (212; 312; 412; 512; 712a, 712b).

8. The vehicle (100) of claim 7, wherein the at least one processor (220; 620) is further configured to:
determine to perform single input single output, SISO, and diversity communication, if a speed of the vehicle (100) is a first speed and a specific region is included in an estimated driving route of the vehicle (100), and
determine to perform multiple input multiple output, MIMO, and diversity communication, if a speed of the vehicle (100) is a second speed faster than the first speed and the specific region is included in the estimated driving route of the vehicle (100).

9. The vehicle (100) of claim 7, wherein the at least one processor (220; 620) is further configured to:
control the first switch (213a; 413a; 613a) to connect the first path, control the second switch (213b; 413b; 613b) to open the second path, control the third switch (613c) to open the third path, and control the fourth switch (613d) to open the fourth path, when the at least one processor (220; 620) determines to perform single input single output, SISO, communication based on the state information of the vehicle (100),
control the first switch (213a; 413a; 613a) to connect the first path, control the second switch (213b; 413b; 613b) to connect the second path, control the third switch (613c) to open the third path, and control the fourth switch (613d) to open the fourth path, when the at least one processor (220; 620) determines to perform SISO and diversity communication based on the state information of the vehicle (100),
control the first switch (213a; 413a; 613a) to connect the first path, control the second switch (213b; 413b; 613b) to open the second path, control the third switch (613c) to connect the third path, and control the fourth switch (613d) to open the fourth path, when the at least one processor (220; 620) determines to perform multiple input multiple output, MIMO, communication based on the state information of the vehicle (100), and
control the first switch (213a; 413a; 613a) to connect the first path, control the second switch (213b; 413b; 613b) to connect the second path, control the third switch (613c) to connect the third path, and control the fourth switch (613d) to connect the fourth path, when the at least one processor (220; 620) determines to perform MIMO and diversity communication based on the state information of the vehicle (100).

10. A method of a vehicle (100) in a wireless communication system, the method comprising:
controlling a transceiver (210; 610; 710), including a first radio frequency, RF, module (311; 411a; 511a; 611a; 711aa) and a second RF module (211b; 411b; 511b; 611b; 711b), wherein each of the first RF module (311; 411a; 511a; 611a; 711aa) and the second RF module (211b; 411b; 511b; 611b; 711b) comprises at least two antenna elements (20a, 20b), to transmit and receive a wireless signal by using at least one of the first RF module (311; 411a; 511a; 611a; 711aa) placed in a first surface or the second RF module (211b; 411b; 511b; 611b; 711b) placed in a second surface of a plurality of surfaces forming an outer edge of the vehicle (100), and
controlling at least one processor (220; 620) to
identify state information of the vehicle (100),
select a communication method from a plurality of communication methods based on the identified state information, wherein the plurality of communication methods are determined based on a number of the at least two antenna elements (20a, 20b) and a position of the at least one surface where the at least two antenna elements (20a, 20b) are placed, and
control the transceiver (210; 610; 710) to perform the selected communication method by using at least one of the first RF module (311; 411a; 511a; 611a; 711aa) or the second RF module (211b; 411b; 511b; 611b; 711b).

11. The method of claim 10,
wherein the state information of the vehicle (100) comprises at least one of a driving mode of the vehicle (100), a speed of the vehicle (100), a driving route of the vehicle (100), a driving environment of the vehicle (100), or information on an operation of a component included in the vehicle (100).

12. The method of claim 11, further comprising:
determining to perform single input single output, SISO, communication, if a speed of the vehicle (100) is a first speed, and
determining to perform multiple input multiple output, MIMO, communication, if a speed of the vehicle (100) is a second speed faster than the first speed.

13. The method of claim 10, further comprising:
controlling a first switch (213a; 413a; 613a) located in a first path to connect the first path between the first RF module (311; 411a; 511a; 611a; 711aa) and a baseband module (212; 312; 412; 512; 712a, 712b) that converts a frequency of a wireless signal to a predetermined frequency, and a second switch (213b; 413b; 613b) located in a second path to open the second path between the second RF module (211b; 411b; 511b; 611b; 711b) and the baseband module (212; 312; 412; 512; 712a, 712b), when the at least one processor (220; 620) determines to perform single input single output (SISO) communication among communication methods;
controlling the first switch (213a; 413a; 613a) to connect the first path and controlling the second switch (213b; 413b; 613b) to connect the second path, when the at least one processor (220; 620) determines to perform SISO and diversity communication among the communication methods; and
controlling the first switch (213a; 413a; 613a) to connect the first path and controlling the second switch (213b; 413b; 613b) to connect the second path, when the at least one processor (220; 620) determines to perform multiple input multiple output, MIMO, communication of among the communication methods.

14. The method of claim 10, further comprising:
controlling a first switch (213a; 413a; 613a) located in a first path to connect the first path between the first RF module (311; 411a; 511a; 611a; 711aa) and a baseband module (212; 312; 412; 512; 712a, 712b) that converts a frequency of a wireless signal to a predetermined frequency, a second switch (213b; 413b; 613b) located in a second path to open the second path between the second RF module (211b; 411b; 511b; 611b; 711b) and the baseband module (212; 312; 412; 512; 712a, 712b), a third switch (613c) located in a third path to open the third path between a third RF module (611c; 711c, 711cc) and the baseband module (212; 312; 412; 512; 712a, 712b) placed in the first surface, and a fourth switch (613d) located in a fourth path to open the fourth path between a fourth RF module (611d; 711d, 711dd) and the baseband module (212; 312; 412; 512; 712a, 712b) placed in the second surface, when the at least one processor (220; 620) determines to perform single input single output, SISO, communication among the communication methods;
controlling the first switch (213a; 413a; 613a) to connect the first path, the second switch (213b; 413b; 613b) to connect the second path, the third switch (613c) to open the third path, and the fourth switch (613d) to open the fourth path, when the at least one processor (220; 620) determines to perform SISO and diversity communication among the communication methods;
controlling the first switch (213a; 413a; 613a) to connect the first path, the second switch (213b; 413b; 613b) to connect the second path, the third switch (613c) to open the third path, and the fourth switch (613d) to open the fourth path, when the at least one processor (220; 620) determines to perform multiple input multiple output, MIMO, communication among the communication methods; and
controlling the first switch (213a; 413a; 613a) to connect the first path, the second switch (213b; 413b; 613b) to connect the second path, the third switch (613c) to connect the third path, and the fourth switch (613d) to connect the fourth path, when the at least one processor (220; 620) determines to perform MIMO and diversity communication among the communication methods.

## Patentansprüche

1. Fahrzeug (100) in einem drahtlosen Kommunikationssystem, das Fahrzeug (100) umfassend:
einen Sendeempfänger (210; 610; 710), umfassend:
ein erstes Funkfrequenz-Modul, RF-Modul (311; 411a; 511a; 611a; 711aa), das in einer ersten Oberfläche angeordnet ist;
ein zweites RF-Modul (211b; 411b; 511b; 611b; 711b), das in einer zweiten Oberfläche einer Mehrzahl von Oberflächen, die eine Außenkante des Fahrzeugs (100) bilden, angeordnet ist,
wobei das erste RF-Modul (311; 411a; 511a; 611a; 711aa) und das zweite RF-Modul (211b; 411b; 511b; 611b; 711b) jeweils mindestens zwei Antennenelemente (20a, 20b) umfassen; und
mindestens einen Prozessor (220; 620), der konfiguriert ist zum Identifizieren von Zustandsinformationen des Fahrzeugs (100),
Auswählen eines Kommunikationsverfahrens aus einer Mehrzahl von Kommunikationsverfahren auf der Grundlage der identifizierten Zustandsinformationen, wobei die Mehrzahl von Kommunikationsverfahren auf der Grundlage einer Anzahl der mindestens zwei Antennenelemente (20a, 20b) und einer Position der mindestens einen Oberfläche, an der die mindestens zwei Antennenelemente (20a, 20b) angeordnet sind, bestimmt werden, und
Steuern des Sendeempfängers (210; 610; 710) zum Durchführen des ausgewählten Kommunikationsverfahrens unter Verwendung von mindestens einem des ersten RF-Moduls (311; 411a; 511a; 611a; 711aa) oder des zweiten RF-Moduls (211b; 411b; 511b; 611b; 711b).

2. Fahrzeug (100) nach Anspruch 1, wobei der mindestens eine Prozessor (220; 620) ferner konfiguriert ist zum Steuern des Sendeempfängers (210; 610; 710) zum Betreiben von mindestens einem des ersten RF-Moduls (311; 411a; 511a; 611a; 711aa) oder des zweiten RF-Moduls (211b; 411b; 511b; 611b; 711b) auf der Grundlage der Zustandsinformationen des Fahrzeugs (100).

3. Fahrzeug (100) nach Anspruch 2, wobei die Zustandsinformationen des Fahrzeugs (100) mindestens eine aus einem Fahrbetriebsmodus des Fahrzeugs (100), einer Geschwindigkeit des Fahrzeugs (100), einer Fahrstrecke des Fahrzeugs (100), einer Fahrtumgebung des Fahrzeugs (100) und Informationen über einen Betrieb einer in dem Fahrzeug (100) enthaltenen Komponente umfassen.

4. Fahrzeug (100) nach Anspruch 3, wobei der Sendeempfänger (210; 610; 710) ferner umfasst:
ein Basisband-Modul (212; 312; 412; 512; 712a, 712b), das dazu konfiguriert ist, eine Frequenz des drahtlosen Signals in eine vorgegebene Frequenz umzuwandeln;
einen ersten Schalter (213a; 413a; 613a) zum Verbinden oder Öffnen eines ersten Pfads zwischen dem ersten RF-Modul (311; 411a; 511a; 611a; 711aa) und dem Basisband-Modul (212; 312; 412; 512; 712a, 712b); und
einen zweiten Schalter (213b; 413b; 613b) zum Verbinden oder Öffnen eines zweiten Pfads zwischen dem zweiten RF-Modul (211b; 411b; 511b; 611b; 711b) und dem Basisband-Modul (212; 312; 412; 512; 712a, 712b).

5. Fahrzeug (100) nach Anspruch 3, wobei der mindestens eine Prozessor ferner konfiguriert ist zum:
Festlegen, dass eine Single-Input-Single-Output-Kommunikation, SISO-Kommunikation, durchgeführt wird, wenn eine Geschwindigkeit des Fahrzeugs (100) eine erste Geschwindigkeit ist, und
Festlegen, dass eine Multi-Input-Multi-Output-Kommunikation, MIMO-Kommunikation, durchgeführt wird, wenn eine Geschwindigkeit des Fahrzeugs (100) eine zweite Geschwindigkeit ist, die schneller als die erste Geschwindigkeit ist.

6. Fahrzeug (100) nach Anspruch 4, wobei der mindestens eine Prozessor (220; 620) ferner konfiguriert ist zum:
Steuern des ersten Schalters (213a; 413a; 613a) zum Verbinden des ersten Pfads und Steuern des zweiten Schalters (213b; 413b; 613b) zum Öffnen des zweiten Pfads, wenn der mindestens eine Prozessor (220; 620) auf der Grundlage der Zustandsinformationen des Fahrzeugs (100) festlegt, dass eine Single-Input-Single-Output-Kommunikation, SISO-Kommunikation, durchgeführt wird,
Steuern des ersten Schalters (213a; 413a; 613a) zum Verbinden des ersten Pfads und Steuern des zweiten Schalters (213b; 413b; 613b) zum Verbinden des zweiten Pfads, wenn der mindestens eine Prozessor (220; 620) auf der Grundlage der Zustandsinformationen des Fahrzeugs (100) festlegt, dass SISO-Kommunikation und Diversitäts-Kommunikation durchgeführt wird, und
Steuern des ersten Schalters (213a; 413a; 613a) zum Verbinden des ersten Pfads und Steuern des zweiten Schalters (213b; 413b; 613b) zum Verbinden des zweiten Pfads, wenn der mindestens eine Prozessor (220; 620) auf der Grundlage der Zustandsinformationen des Fahrzeugs (100) festlegt, dass eine Multi-Input-Multi-Output-Kommunikation, MIMO-Kommunikation, durchgeführt wird.

7. Fahrzeug (100) nach Anspruch 4, wobei der Sendeempfänger (210; 610; 710) ferner umfasst:
ein drittes RF-Modul (611c; 711c, 711cc), das in der ersten Oberfläche angeordnet ist und mindestens zwei Antennenelemente (20a, 20b) umfasst;
ein viertes RF-Modul (611d; 711d, 711dd), das in der zweiten Oberfläche angeordnet ist und mindestens zwei Antennenelemente (20a, 20b) umfasst;
einen dritten Schalter (613c) zum Verbinden oder Öffnen eines dritten Pfads zwischen dem dritten RF-Modul (611c; 711c, 711cc) und dem Basisband-Modul (212; 312; 412; 512; 712a, 712b); und
einen vierten Schalter (613d) zum Verbinden oder Öffnen eines vierten Pfads zwischen dem vierten RF-Modul (611d; 711d, 711dd) und dem Basisband-Modul (212; 312; 412; 512; 712a, 712b).

8. Fahrzeug (100) nach Anspruch 7, wobei der mindestens eine Prozessor (220; 620) ferner konfiguriert ist zum:
Festlegen, dass Single-Input-Single-Output-Kommunikation, SISO-Kommunikation, und Diversitäts-Kommunikation durchgeführt wird, wenn eine Geschwindigkeit des Fahrzeugs (100) eine erste Geschwindigkeit ist und eine bestimmte Region in einer abgeschätzten Fahrstrecke des Fahrzeugs (100) enthalten ist, und
Festlegen, dass Multi-Input-Multi-Output-Kommunikation, MIMO-Kommunikation, und Diversitäts-Kommunikation durchgeführt wird, wenn eine Geschwindigkeit des Fahrzeugs (100) eine zweite Geschwindigkeit ist, die schneller als die erste Geschwindigkeit ist, und die bestimmte Region in der abgeschätzten Fahrstrecke des Fahrzeugs (100) enthalten ist.

9. Fahrzeug (100) nach Anspruch 7, wobei der mindestens eine Prozessor (220; 620) ferner konfiguriert ist zum:
Steuern des ersten Schalters (213a; 413a; 613a) zum Verbinden des ersten Pfads, Steuern des zweiten Schalters (213b; 413b; 613b) zum Öffnen des zweiten Pfads, Steuern des dritten Schalters (613c) zum Öffnen des dritten Pfads und Steuern des vierten Schalters (613d) zum Öffnen des vierten Pfads, wenn der mindestens eine Prozessor (220; 620) auf der Grundlage der Zustandsinformationen des Fahrzeugs (100) festlegt, dass eine Single-Input-Single-Output-Kommunikation, SISO-Kommunikation, durchgeführt wird,
Steuern des ersten Schalters (213a; 413a; 613a) zum Verbinden des ersten Pfads, Steuern des zweiten Schalters (213b; 413b; 613b) zum Verbinden des zweiten Pfads, Steuern des dritten Schalters (613c) zum Öffnen des dritten Pfads und Steuern des vierten Schalters (613d) zum Öffnen des vierten Pfads, wenn der mindestens eine Prozessor (220; 620) auf der Grundlage der Zustandsinformationen des Fahrzeugs (100) festlegt, dass SISO-Kommunikation und Diversitäts-Kommunikation durchgeführt wird,
Steuern des ersten Schalters (213a; 413a; 613a) zum Verbinden des ersten Pfads, Steuern des zweiten Schalters (213b; 413b; 613b) zum Öffnen des zweiten Pfads, Steuern des dritten Schalters (613c) zum Verbinden des dritten Pfads und Steuern des vierten Schalters (613d) zum Öffnen des vierten Pfads, wenn der mindestens eine Prozessor (220; 620) auf der Grundlage der Zustandsinformationen des Fahrzeugs (100) festlegt, dass eine Multi-Input-Multi-Output-Kommunikation, MIMO-Kommunikation, durchgeführt wird, und
Steuern des ersten Schalters (213a; 413a; 613a) zum Verbinden des ersten Pfads, Steuern des zweiten Schalters (213b; 413b; 613b) zum Verbinden des zweiten Pfads, Steuern des dritten Schalters (613c) zum Verbinden des dritten Pfads und Steuern des vierten Schalters (613d) zum Verbinden des vierten Pfads, wenn der mindestens eine Prozessor (220; 620) auf der Grundlage der Zustandsinformationen des Fahrzeugs (100) festlegt, dass MIMO-Kommunikation und Diversitäts-Kommunikation durchgeführt wird.

10. Verfahren eines Fahrzeugs (100) in einem drahtlosen Kommunikationssystem, das Verfahren umfassend:
Steuern eines Sendeempfängers (210; 610; 710), enthaltend ein erstes Funkfrequenz-Modul, RF-Modul (311; 411a; 511a; 611a; 711aa) und ein zweites RF-Modul (211b; 411b; 511b; 611b; 711b), wobei das erste RF-Modul (311; 411a; 511a; 611a; 711aa) und das zweite RF-Modul (211b; 411b; 511b; 611b; 711b) jeweils mindestens zwei Antennenelemente (20a, 20b) umfassen, zum Senden und Empfangen eines drahtlosen Signals unter Verwendung von mindestens einem des ersten RF-Moduls (311; 411a; 511a; 611a; 711aa), das in einer ersten Oberfläche angeordnet ist, oder des zweiten RF-Moduls (211b; 411b; 511b; 611b; 711b), das in einer zweiten Oberfläche einer Mehrzahl von Oberflächen, die eine Außenkante des Fahrzeugs (100) bilden, angeordnet ist, und
Steuern mindestens eines Prozessors (220; 620) zum
Identifizieren von Zustandsinformationen des Fahrzeugs (100),
Auswählen eines Kommunikationsverfahrens aus einer Mehrzahl von Kommunikationsverfahren auf der Grundlage der identifizierten Zustandsinformationen, wobei die Mehrzahl von Kommunikationsverfahren auf der Grundlage einer Anzahl der mindestens zwei Antennenelemente (20a, 20b) und einer Position der mindestens einen Oberfläche, an der die mindestens zwei Antennenelemente (20a, 20b) angeordnet sind, bestimmt werden, und
Steuern des Sendeempfängers (210; 610; 710) zum Durchführen des ausgewählten Kommunikationsverfahrens unter Verwendung von mindestens einem des ersten RF-Moduls (311; 411a; 511a; 611a; 711aa) oder des zweiten RF-Moduls (211b; 411b; 511b; 611b; 711b).

11. Verfahren nach Anspruch 10, wobei die Zustandsinformationen des Fahrzeugs (100) mindestens eine aus einem Fahrbetriebsmodus des Fahrzeugs (100), einer Geschwindigkeit des Fahrzeugs (100), einer Fahrstrecke des Fahrzeugs (100), einer Fahrtumgebung des Fahrzeugs (100) und Informationen über einen Betrieb einer in dem Fahrzeug (100) enthaltenen Komponente umfassen.

12. Verfahren nach Anspruch 11, ferner umfassend:
Festlegen, dass eine Single-Input-Single-Output-Kommunikation, SISO-Kommunikation, durchgeführt wird, wenn eine Geschwindigkeit des Fahrzeugs (100) eine erste Geschwindigkeit ist, und
Festlegen, dass eine Multi-Input-Multi-Output-Kommunikation, MIMO-Kommunikation, durchgeführt wird, wenn eine Geschwindigkeit des Fahrzeugs (100) eine zweite Geschwindigkeit ist, die schneller als die erste Geschwindigkeit ist.

13. Verfahren nach Anspruch 10, ferner umfassend:
Steuern eines ersten Schalters (213a; 413a; 613a), der sich in einem ersten Pfad befindet, zum Verbinden des ersten Pfads zwischen dem ersten RF-Modul (311; 411a; 511a; 611a; 711aa) und einem Basisband-Modul (212; 312; 412; 512; 712a, 712b), das eine Frequenz eines drahtlosen Signals in eine vorgegebene Frequenz umwandelt, und eines zweiten Schalters (213b; 413b; 613b), der sich in einem zweiten Pfad befindet, zum Öffnen des zweiten Pfads zwischen dem zweiten RF-Modul (211b; 411b; 511b; 611b; 711b) und dem Basisband-Modul (212; 312; 412; 512; 712a, 712b), wenn der mindestens eine Prozessor (220; 620) festlegt, dass unter den Kommunikationsverfahren eine Single-Input-Single-Output-Kommunikation (SISO-Kommunikation) durchgeführt wird;
Steuern des ersten Schalters (213a; 413a; 613a) zum Verbinden des ersten Pfads und Steuern des zweiten Schalters (213b; 413b; 613b) zum Verbinden des zweiten Pfads, wenn der mindestens eine Prozessor (220; 620) festlegt, dass unter den Kommunikationsverfahren SISO-Kommunikation und Diversitäts-Kommunikation durchgeführt wird; und
Steuern des ersten Schalters (213a; 413a; 613a) zum Verbinden des ersten Pfads und Steuern des zweiten Schalters (213b; 413b; 613b) zum Verbinden des zweiten Pfads, wenn der mindestens eine Prozessor (220; 620) festlegt, dass unter den Kommunikationsverfahren eine Multi-Input-Multi-Output-Kommunikation, MIMO-Kommunikation, durchgeführt wird.

14. Verfahren nach Anspruch 10, ferner umfassend:
Steuern eines ersten Schalters (213a; 413a; 613a), der sich in einem ersten Pfad befindet, zum Verbinden des ersten Pfads zwischen dem ersten RF-Modul (311; 411a; 511a; 611a; 711aa) und einem Basisband-Modul (212; 312; 412; 512; 712a, 712b), das eine Frequenz eines drahtlosen Signals in eine vorgegebene Frequenz umwandelt, eines zweiten Schalters (213b; 413b; 613b), der sich in einem zweiten Pfad befindet, zum Öffnen des zweiten Pfads zwischen dem zweiten RF-Modul (211b; 411b; 511b; 611b; 711b) und dem Basisband-Modul (212; 312; 412; 512; 712a, 712b), eines dritten Schalters (613c), der sich in einem dritten Pfad befindet, zum Öffnen des dritten Pfads zwischen einem dritten RF-Modul (611c; 711c, 711cc) und dem Basisband-Modul (212; 312; 412; 512; 712a, 712b), das in der ersten Oberfläche angeordnet ist, und eines vierten Schalters (613d), der sich in einem vierten Pfad befindet, zum Öffnen des vierten Pfads zwischen einem vierten RF-Modul (611d; 711d, 711dd) und dem Basisband-Modul (212; 312; 412; 512; 712a, 712b), das in der zweiten Oberfläche angeordnet ist, wenn der mindestens eine Prozessor (220; 620) festlegt, dass unter den Kommunikationsverfahren eine Single-Input-Single-Output-Kommunikation, SISO-Kommunikation, durchgeführt wird;
Steuern des ersten Schalters (213a; 413a; 613a) zum Verbinden des ersten Pfads, des zweiten Schalters (213b; 413b; 613b) zum Verbinden des zweiten Pfads, des dritten Schalters (613c) zum Öffnen des dritten Pfads und des vierten Schalters (613d) zum Öffnen des vierten Pfads, wenn der mindestens eine Prozessor (220; 620) festlegt, dass unter den Kommunikationsverfahren SISO-Kommunikation und Diversitäts-Kommunikation durchgeführt wird;
Steuern des ersten Schalters (213a; 413a; 613a) zum Verbinden des ersten Pfads, des zweiten Schalters (213b; 413b; 613b) zum Verbinden des zweiten Pfads, des dritten Schalters (613c) zum Öffnen des dritten Pfads und des vierten Schalters (613d) zum Öffnen des vierten Pfads, wenn der mindestens eine Prozessor (220; 620) festlegt, dass unter den Kommunikationsverfahren eine Multi-Input-Multi-Output-Kommunikation, MIMO-Kommunikation, durchgeführt wird; und
Steuern des ersten Schalters (213a; 413a; 613a) zum Verbinden des ersten Pfads, des zweiten Schalters (213b; 413b; 613b) zum Verbinden des zweiten Pfads, des dritten Schalters (613c) zum Verbinden des dritten Pfads und des vierten Schalters (613d) zum Verbinden des vierten Pfads, wenn der mindestens eine Prozessor (220; 620) festlegt, dass unter den Kommunikationsverfahren MIMO-Kommunikation und Diversitäts-Kommunikation durchgeführt wird.

## Revendications

1. Véhicule (100) dans un système de communication sans fil, le véhicule (100) comprenant :
un émetteur-récepteur (210 ; 610 ; 710) comprenant :
un premier module de radiofréquence, RF (311 ; 411a ; 511a ; 611a ; 711aa) placé dans une première surface ;
un second module RF (211b ; 411b ; 511b ; 611b; 711b) placé dans une seconde surface d'une pluralité de surfaces formant un bord extérieur du véhicule (100),
où chacun des premier module RF (311 ; 411a ; 511a ; 611a ; 711aa) et second module RF (211b ; 411b; 511b ; 611b ; 711b) comprend au moins deux éléments d'antenne (20a, 20b) ; et
au moins un processeur (220 ; 620) configuré pour
identifier des informations d'état du véhicule (100),
sélectionner un procédé de communication parmi une pluralité de procédés de communication sur la base des informations d'état identifiées, où la pluralité de procédés de communication est déterminée sur la base d'un nombre desdits au moins deux éléments d'antenne (20a, 20b) et d'une position de ladite au moins une surface où sont placés lesdits au moins deux éléments d'antenne (20a, 20b), et
commander l'émetteur-récepteur (210 ; 610 ; 710) pour exécuter le procédé de communication sélectionné en utilisant au moins l'un des premier module RF (311 ; 411a ; 511a; 611a; 711aa) ou second module RF (211b ; 411b; 511b; 611b; 711b).

2. Véhicule (100) selon la revendication 1, où ledit au moins un processeur (220 ; 620) est en outre configuré pour commander l'émetteur-récepteur (210 ; 610 ; 710) pour faire fonctionner au moins l'un des premier module RF (311 ; 411a ; 511a ; 611a ; 711aa) ou second module RF (211b ; 411b ; 511b ; 611b ; 711b) sur la base des informations d'état du véhicule (100).

3. Véhicule (100) selon la revendication 2, où les informations d'état du véhicule (100) comprennent au moins l'un des éléments suivants : un mode de conduite du véhicule (100), une vitesse du véhicule (100), un itinéraire de conduite du véhicule (100), un environnement de conduite du véhicule (100), ou des informations sur le fonctionnement d'un composant inclus dans le véhicule (100).

4. Véhicule (100) selon la revendication 3, où l'émetteur-récepteur (210 ; 610 ; 710) comprend en outre :
un module de bande de base (212 ; 312 ; 412 ; 512 ; 712a, 712b) configuré pour convertir une fréquence du signal sans fil en une fréquence prédéterminée ;
un premier commutateur (213a ; 413a ; 613a) pour connecter ou ouvrir une première voie entre le premier module RF (311 ; 411a ; 511a ; 611a ; 711aa) et le module de bande de base (212 ; 312 ; 412 ; 512 ; 712a, 712b) ; et
un second commutateur (213b ; 413b ; 613b) pour connecter ou ouvrir une seconde voie entre le second module RF (211b ; 411b ; 511b ; 611b ; 711b) et le module de bande de base (212 ; 312 ; 412 ; 512 ; 712a, 712b).

5. Véhicule (100) selon la revendication 3, où ledit au moins un processeur est en outre configuré pour :
déterminer l'exécution d'une communication à entrée unique et sortie unique, SISO, si une vitesse du véhicule (100) est une première vitesse, et
déterminer l'exécution d'une communication à entrées multiples et sorties multiples, MIMO,, si une vitesse du véhicule (100) est une seconde vitesse plus rapide que la première vitesse.

6. Véhicule (100) selon la revendication 4, où ledit au moins un processeur (220 ; 620) est en outre configuré pour :
commander le premier commutateur (213a ; 413a ; 613a) pour connecter la première voie et commander le second commutateur (213b ; 413b ; 613b) pour ouvrir la seconde voie, lorsque ledit au moins un processeur (220 ; 620) détermine l'exécution d'une communication à entrée unique et sortie unique, SISO, sur la base des informations d'état du véhicule (100),
commander le premier commutateur (213a ; 413a ; 613a) pour connecter la première voie et commander le second commutateur (213b ; 413b ; 613b) pour connecter la seconde voie, lorsque ledit au moins un processeur (220 ; 620) détermine l'exécution d'une communication en SISO et en diversité sur la base des informations d'état du véhicule (100), et
commander le premier commutateur (213a ; 413a ; 613a) pour connecter la première voie et commander le second commutateur (213b ; 413b ; 613b) pour connecter la seconde voie, lorsque ledit au moins un processeur (220 ; 620) détermine l'exécution d'une communication à entrées multiples et sorties multiples, MIMO, sur la base des informations d'état du véhicule (100).

7. Véhicule (100) selon la revendication 4, où l'émetteur-récepteur (210 ; 610 ; 710) comprend en outre :
un troisième module RF (611c ; 711c, 711cc) placé dans la première surface et comprenant au moins deux éléments d'antenne (20a, 20b) ;
un quatrième module RF (611d ; 711d, 711dd) placé dans la seconde surface et comprenant au moins deux éléments d'antenne (20a, 20b) ;
un troisième commutateur (613c) pour connecter ou ouvrir une troisième voie entre le troisième module RF (611c ; 711c, 711cc) et le module de bande de base (212 ; 312 ; 412 ; 512 ; 712a, 712b) ; et
un quatrième commutateur (613d) pour connecter ou ouvrir une quatrième voie entre le quatrième module RF (611d ; 711d, 711dd) et le module de bande de base (212 ; 312 ; 412 ; 512 ; 712a, 712b).

8. Véhicule (100) selon la revendication 7, où ledit au moins un processeur (220 ; 620) est en outre configuré pour :
détermine l'exécution d'une communication à entrée unique et sortie unique, SISO, et en diversité, si une vitesse du véhicule (100) est une première vitesse et une région spécifique est incluse dans un itinéraire de conduite estimé du véhicule (100), et
détermine l'exécution d'une communication à entrées multiples et sorties multiples, MIMO, et en diversité, si une vitesse du véhicule (100) est une seconde vitesse plus rapide que la première vitesse et la région spécifique est incluse dans l'itinéraire de conduite estimé du véhicule (100).

9. Véhicule (100) selon la revendication 7, où ledit au moins un processeur (220 ; 620) est en outre configuré pour :
commander le premier commutateur (213a ; 413a ; 613a) pour connecter la première voie, commander le second commutateur (213b ; 413b ; 613b) pour ouvrir la seconde voie, commander le troisième commutateur (613c) pour ouvrir la troisième voie, et commander le quatrième commutateur (613d) pour ouvrir la quatrième voie, lorsque ledit au moins un processeur (220 ; 620) détermine l'exécution d'une communication à entrée unique et sortie unique, SISO, sur la base des informations d'état du véhicule (100),
commander le premier commutateur (213a ; 413a ; 613a) pour connecter la première voie, commander le second commutateur (213b ; 413b ; 613b) pour connecter la seconde voie, commander le troisième commutateur (613c) pour ouvrir la troisième voie, et commander le quatrième commutateur (613d) pour ouvrir la quatrième voie, lorsque ledit au moins un processeur (220 ; 620) détermine l'exécution d'une communication en SISO et en diversité sur la base des informations d'état du véhicule (100),
commander le premier commutateur (213a ; 413a ; 613a) pour connecter la première voie, commander le second commutateur (213b ; 413b ; 613b) pour ouvrir la seconde voie, commander le troisième commutateur (613c) pour connecter la troisième voie, et commander le quatrième commutateur (613d) pour ouvrir la quatrième voie, lorsque ledit au moins un processeur (220 ; 620) détermine l'exécution d'une communication à entrées multiples et sorties multiples, (MIMO, sur la base des informations d'état du véhicule (100), et
commander le premier commutateur (213a ; 413a ; 613a) pour connecter la première voie, commander le second commutateur (213b ; 413b ; 613b) pour connecter la seconde voie, commander le troisième commutateur (613c) pour connecter la troisième voie, et commander le quatrième commutateur (613d) pour connecter la quatrième voie, lorsque ledit au moins un processeur (220 ; 620) détermine l'exécution d'une communication en MIMO et en diversité sur la base des informations d'état du véhicule (100).

10. Procédé de communication d'un véhicule (100) dans un système de communication sans fil, le procédé comprenant :
la commande d'un émetteur-récepteur (210 ; 610 ; 710), comprenant un premier module RF de radiofréquence (311 ; 411a ; 511a ; 611a ; 711aa) et un second module RF (211b ; 411b; 511b; 611b; 711b), où chacun des premier module RF (311 ; 411a; 511a; 611a ; 711aa) et second module RF (211b ; 411b ; 511b ; 611b ; 711b) comprend au moins deux éléments d'antenne (20a, 20b), pour émettre et recevoir un signal sans fil en utilisant au moins l'un des premier module RF (311 ; 411a ; 511a ; 611a ; 711aa) placé dans une première surface ou second module RF (211b ; 411b ; 511b ; 611b ; 711b) placé dans une seconde surface d'une pluralité de surfaces formant un bord extérieur du véhicule (100), et
la commande d'au moins un processeur (220 ; 620) pour
identifier des informations d'état du véhicule (100),
sélectionner un procédé de communication parmi une pluralité de procédés de communication sur la base des informations d'état identifiées, où la pluralité de procédés de communication est déterminée sur la base d'un nombre desdits au moins deux éléments d'antenne (20a, 20b) et d'une position de ladite au moins une surface où lesdits au moins deux éléments d'antenne (20a, 20b) sont placés, et
la commande de l'émetteur-récepteur (210 ; 610 ; 710) pour exécuter le procédé de communication sélectionné en utilisant au moins un des premier module RF (311 ; 411a ; 511a; 611a; 711aa) ou second module RF (211b ; 411b; 511b; 611b; 711b).

11. Procédé selon la revendication 10, où les informations d'état du véhicule (100) comprennent au moins l'un des éléments suivants : un mode de conduite du véhicule (100), une vitesse du véhicule (100), un itinéraire de conduite du véhicule (100), un environnement de conduite du véhicule (100), ou des informations sur le fonctionnement d'un composant inclus dans le véhicule (100).

12. Procédé selon la revendication 11, comprenant en outre :
la détermination d'exécuter une communication à entrée unique et sortie unique, SISO, si une vitesse du véhicule (100) est une première vitesse, et
la détermination d'exécuter une communication à entrées multiples et sorties multiples, MIMO, si une vitesse du véhicule (100) est une seconde vitesse plus rapide que la première vitesse.

13. Procédé selon la revendication 10, comprenant en outre :
la commande d'un premier commutateur (213a ; 413a ; 613a) situé dans une première voie pour connecter la première voie entre le premier module RF (311 ; 411a ; 511a; 611a ; 711aa) et un module de bande de base (212 ; 312 ; 412 ; 512 ; 712a, 712b) qui convertit une fréquence d'un signal sans fil en une fréquence prédéterminée, et un second commutateur (213b ; 413b ; 613b) situé dans une seconde voie pour ouvrir la seconde voie entre le second module RF (211b ; 411b ; 511b ; 611b ; 711b) et le module de bande de base (212 ; 312 ; 412 ; 512 ; 712a, 712b), lorsque ledit au moins un processeur (220 ; 620) détermine l'exécution d'une communication à entrée unique et sortie unique (SISO) parmi les procédés de communication ;
la commande du premier commutateur (213a ; 413a ; 613a) pour connecter la première voie et la commande du second commutateur (213b ; 413b ; 613b) pour connecter la seconde voie, lorsque ledit au moins un processeur (220 ; 620) détermine l'exécution d'une communication en SISO et en diversité parmi les procédés de communication ; et
la commande du premier commutateur (213a ; 413a ; 613a) pour connecter la première voie et la commande du second commutateur (213b ; 413b ; 613b) pour connecter la seconde voie, lorsque ledit au moins un processeur (220 ; 620) détermine l'exécution d'une communication à entrées multiples et sorties multiples, MIMO, parmi les procédés de communication.

14. Procédé selon la revendication 10, comprenant en outre :
la commande d'un premier commutateur (213a ; 413a ; 613a) situé dans une première voie pour connecter la première voie entre le premier module RF (311 ; 411a ; 511a; 611a; 711aa) et un module de bande de base (212 ; 312 ; 412 ; 512 ; 712a, 712b) qui convertit une fréquence d'un signal sans fil en une fréquence prédéterminée, un second commutateur (213b ; 413b ; 613b) situé dans une seconde voie pour ouvrir la seconde voie entre le second module RF (211b ; 411b ; 511b ; 611b ; 711b) et le module de bande de base (212 ; 312 ; 412 ; 512 ; 712a, 712b), un troisième commutateur (613c) situé dans une troisième voie pour ouvrir la troisième voie entre un troisième module RF (611c ; 711c, 711cc) et le module de bande de base (212 ; 312 ; 412 ; 512 ; 712a, 712b) placé dans la première surface, et un quatrième commutateur (613d) situé dans une quatrième voie pour ouvrir la quatrième voie entre un quatrième module RF (611d ; 711d, 711dd) et le module de bande de base (212 ; 312 ; 412 ; 512 ; 712a, 712b) placé dans la seconde surface, lorsque ledit au moins un processeur (220 ; 620) détermine l'exécution d'une communication à entrée unique et sortie unique, SISO, parmi les procédés de communication ;
la commande du premier commutateur (213a ; 413a ; 613a) pour connecter la première voie, le second commutateur (213b ; 413b ; 613b) pour connecter la seconde voie, le troisième commutateur (613c) pour ouvrir la troisième voie, et le quatrième commutateur (613d) pour ouvrir la quatrième voie, lorsque ledit au moins un processeur (220 ; 620) détermine l'exécution d'une communication en SISO et en diversité parmi les procédés de communication ;
la commande du premier commutateur (213a ; 413a ; 613a) pour connecter la première voie, le second commutateur (213b ; 413b ; 613b) pour connecter la seconde voie, le troisième commutateur (613c) pour ouvrir la troisième voie, et le quatrième commutateur (613d) pour ouvrir la quatrième voie, lorsque ledit au moins un processeur (220 ; 620) détermine l'exécution d'une communication à entrées multiples et sorties multiples, MIMO, parmi les procédés de communication ; et
la commande du premier commutateur (213a ; 413a ; 613a) pour connecter la première voie, le second commutateur (213b ; 413b ; 613b) pour connecter la seconde voie, le troisième commutateur (613c) pour connecter la troisième voie, et le quatrième commutateur (613d) pour connecter la quatrième voie, lorsque ledit au moins un processeur (220 ; 620) détermine l'exécution d'une communication en MIMO et en diversité parmi les procédés de communication.
